# EUROPEAN PATENT APPLICATION

(11) **EP 4 814 469 A1**
(43) Date of publication of application: **30.09.2026**
(21) Application number: 26160016.7
(22) Date of filing: 23.02.2026
(51) Int. Cl.: G01M 5/00, G06F 30/23, G06F 113/26, G06F 119/04

(54) **METHODS AND SYSTEMS TO EVALUATE STRUCTURES TO ACCOUNT FOR R-CURVE EFFECTS**

(30) Priority: 25.03.2025 US 202519089316
(71) Applicant: The Boeing Company, Arlington, VA 22202 (US)
(72) Inventor: Justusson, Brian Patrick, Arlington, VA, 22202 (US); Liguore, Salvatore Leonard, Arlington, VA, 22202 (US)
(74) Representative: Hoffmann Eitle

(57) **Abstract**

Methods and systems of determining propagation of a crack within a structure made of a bonded or layered material. In some examples, the method comprises performing experimental testing on one or more test coupons of the material and determining an R-curve and a Paris law curve. The method also comprises performing a computer simulation that applies a cycle of loads to a computer model of the structure, for each of the loads: determining strain energy release rates and a crack length of the applied load; applying the strain energy release rates and crack lengths to the R-curve and determining an effective strain energy release rate; applying the effective strain energy release rate to the Paris law curve and determining a change in the crack length for the cycle; and advancing a crack that is simulated in the computer model.

## Description

### TECHNOLOGICAL FIELD

The present disclosure relates generally to the field of computer modeling and, more specifically, to predicting crack propagation in a structure using computer modeling simulations.

### BACKGROUND

Aerospace structures are designed to perform specific functions. For example, a strut of an aircraft wing is designed to withstand the various forces experienced during flight. A common practice is to design the structure to withstand the forces, and to also design an additional margin in the structure (e.g., a 15% margin based on a typical strength value for compression strength). This additional margin has been widely believed to be sufficient to prevent crack development and/or slow crack growth during the life of the aircraft.

The addition of material to a design has several drawbacks. For example, a wing panel designed with an original thickness is increased to a larger thickness. This additional margin adds weight to the structure. This can pose issues when the weight is a consideration of the design. For example, an aircraft part that adds weight may decrease the efficiency of the aircraft and may require other changes in the overall design (e.g., more thrust from the engines for takeoff and flight operations). Further, an increased amount of material in a structure may result in higher material costs to manufacture the structure.

Processes and systems are needed to evaluate crack propagation in a structure to determine if the design is a viable option for its intended purpose.

### SUMMARY

One aspect is directed to a method of determining propagation of a crack within a structure made of a bonded or layered material. The method comprises performing experimental testing on one or more test coupons of the material and determining an R-curve and a Paris law curve. The method also comprises performing a computer simulation that applies a cycle of loads to a computer model of the structure, for each of the loads: determining strain energy release rates and a crack length of the applied load; applying the strain energy release rates and crack lengths to the R-curve and determining an effective strain energy release rate; applying the effective strain energy release rate to the Paris law curve and determining a change in the crack length for the cycle; and advancing a crack that is simulated in the computer model.

In another aspect, determining the strain energy release rates for each of the loads comprises determining a maximum strain energy release rate and a minimum strain energy release rate for each of the loads.

In another aspect, performing experimental testing on one or more test coupons comprises connecting the one or more test coupons to a test frame and performing fatigue testing and static testing on the one or more test coupons.

In another aspect, the method further comprises applying a spectrum of loads with different forces to the computer model during the computer simulation.

In another aspect, the method further comprises including an initial crack in the computer model prior to applying the cycle of loads to the computer model.

In another aspect, the method further comprises based on a length of the crack after each of the loads determining whether the structure has detrimental crack growth with the structure having a load carrying capability below a predetermined threshold.

In another aspect, the method further comprises performing the computer simulation and analyzing an effect of cyclical loading on a structure.

In another aspect, the method further comprises analyzing a growth of the crack in the structure and determining how the crack grows during successive ones of the load cycles.

In another aspect, the method further comprises determining a residual strength of the structure and determining whether the structure will fail as a result of crack advance.

In another aspect, the method further comprises linking the structure to a global finite element model, and determining load redistribution of the structure to a larger structure to which it is connected based on a growth in the crack.

In another aspect, the method further comprises determining that the structure is viable for an intended purpose based on a change in the crack growth during the cyclic loads and building the structure from the material.

One aspect is directed to a method of determining propagation of a crack within a structure made of a bonded or layered material. The method comprises: performing experimental testing on one or more test coupons of the material; determining an R-curve and a Paris law curve of the material; performing computer simulations on a computer model of the structure; and applying results of computer simulations to the R-curve and the Paris law curve and determining a change in a crack in the structure.

In another aspect, the method further comprises determining the structure is viable when the crack is below a predetermined threshold.

In another aspect, the method further comprises building an actual structure from the material after determining that the structure is viable.

In another aspect, the method further comprises installing the actual structure in an aircraft.

In another aspect, the method further comprises determining a critical strain energy release rate from the experimental testing.

One aspect is directed to a computing device configured to determine propagation of a crack within a structure made of a bonded or layered material. The computing device comprises processing circuitry, and memory circuitry comprising a computer model of the structure and physical properties of the structure with the memory circuitry further comprising program instructions that, when executed by the processing circuitry, configures the computing device to: perform a computer simulation that applies a cycle of loads to the computer model; determine strain energy release rates and a crack length after each of the applied loads through the computer model; apply the strain energy release rates and crack lengths to an R-curve of the material and determine effective strain energy release rates for the applied loads; apply the effective strain energy release rates to a Paris law curve of the material and determine changes in the crack length for the load cycles; and advance a crack that is simulated in the computer model after the load cycles.

In another aspect, the computing device configured to determine that the structure is viable after the load cycles when the crack is less than a predetermined threshold.

In another aspect, the computing device is configured to determine a residual strength of the structure and whether the structure will fail based on the residual strength.

In another aspect, the computer model is a Davidson model.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is an isometric view of an aircraft that is constructed from one or more designed structures.
Figure 2 is a schematic diagram of a test coupon mounted in a load frame.
Figure 3 is a graph illustrating an R-curve of a material.
Figure 4 is a graph illustrating Paris law behavior of a material.
Figure 5 is a schematic diagram of a computing device configured to run simulations on one or more computer models of the structure.
Figure 6 is a flowchart diagram illustrating a method of evaluating a design of a structure.
Figure 7 is a flowchart diagram illustrating a method of evaluating a design of a structure.
Figure 8 is a schematic diagram of a computing device.

### DETAILED DESCRIPTION

The present application is directed to systems and methods for determining fatigue behavior of a structure constructed from layered or bonded material and the effect of applied loads on a crack in the material. A variety of different materials can be used for the structure. The materials include various bonded or layered structures such as but not limited to carbon-fiber reinforced polymers, ceramic matrix composites, metal/metal bonded materials, metal composite materials, and layered additive materials. The term "material" is used herein to referred to the various bonded or layered materials.

The material results in the structure being lightweight yet robust. These are particularly beneficial in various circumstances, such as when the structure is incorporated into an aircraft as this facilitates an aircraft's efficiency and performance. The structures can be stand-alone that are designed to be used independent of other parts, or can be a part of a larger assembly, such as a panel that is mounted to support members of an aircraft wing. The structures can have a variety of different constructions including but not limited to a co-cured structure and a co-bonded structure. The term "structure" is used herein to refer to a design constructed from the material.

The application analyzes crack propagation in a structure. A crack can have various configurations in a structure. Examples include but are not limited to a fracture, delamination, and a discontinuity that occurs at various locations within the matrix such as between plies, between adhesive interfaces, between co-bonded interfaces, between co-cured interfaces, and various combinations. The term "crack" is used herein to refer to these occurrences.

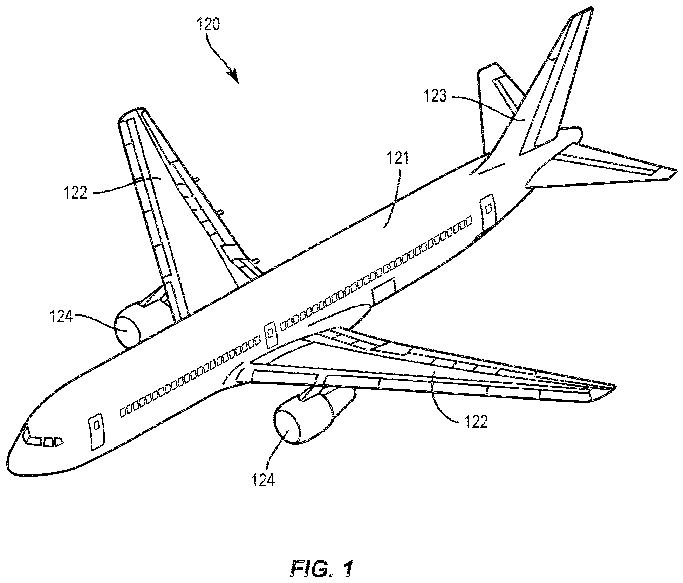

Structures are used in a wide variety of contexts. Figure 1 illustrates one example that includes structures in an aircraft 120. These structures can be used in one or more of the fuselage 121, wings 122, and a tail section 123. The structures can also be used in the engines 124 including one or more of the nacelles that extend around the exterior of the engines and various internal engine parts.

The methods and systems analyze the effect of cyclical loading on a structure. Specifically, the methods and systems analyze the growth of a crack in the structure and how the crack grows during successive load cycles. The methods and systems are used to determine if there is detrimental crack growth during use (e.g., during operation of an aircraft). This includes determining whether the crack would advance in such a way that it results in the reduction of the load carrying capability of the structure. In some examples, the methods and systems determine whether the structure experiences a loss in load carrying capability relative to a predetermined threshold.

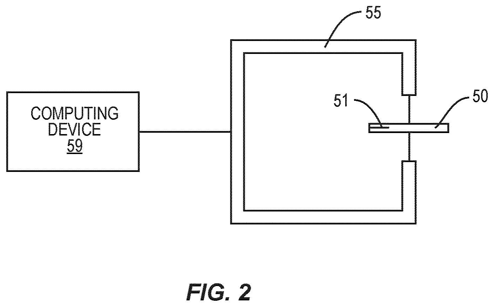

The methods and systems use a combination of experimental testing of the material and computer simulations of the structure. The experimental testing uses test coupons of the material. Figure 2 schematically illustrates a test coupon 50 that is mounted to a test frame 55. The test coupon 50 has a non-pristine configuration that includes a crack 51 representative of a delamination, crack, discontinuity, etc. During the testing, the test coupon 50 is mounted to the test frame 55 which applies controlled loading conditions. The testing can use various loading methods, including but not limited to load controlled and displacement controlled. A computing device 59 controls the operation of the test frame 55 and the load conditions placed on the test coupons 50. The computing device 59 includes circuitry to perform the testing, such as one or more of processing circuitry, memory circuitry, and communication circuitry.

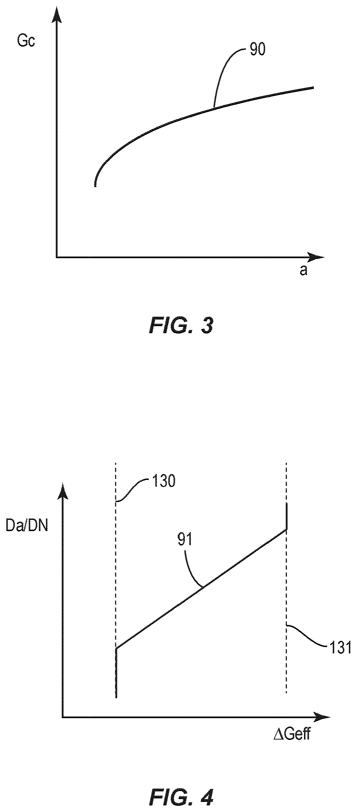

The experimental testing on the test coupons 50 determines a variety of different physical properties of the material. The experimental testing can include static testing and/or fatigue testing. Static testing includes the application of a constant load or constant displacement to one or more of the test coupons 50. The static testing determines a critical energy release rate Gc which is the resistance of the material to crack growth. Gc assesses how much energy a material can absorb before a crack begins to extend significantly. A crack will grow when the available energy release rate G is greater than or equal to the critical value Gc. The static testing also determines crack tip displacement and the length of the crack a. The static testing determines an R-curve of the material. As illustrated in Figure 3, the R-curve 90 is a relationship between critical strain energy release rate Gc and crack length a. The value of Gc as prescribed by the crack length a and static R-curve can be used to predict fatigue life and assess the potential crack growth rate under varying load conditions.

The experimental testing also includes fatigue testing. The fatigue testing applies cyclic loading to the test coupons 50. The cyclic loading includes a series of loads each with a maximum value and a minimum value (i.e., peak-valley pair). Each load has an R-ratio which is a ratio of the minimum force and maximum force applied at each cycle. The fatigue testing determines a change in the crack length for a given load cycle or number of load cycles (Da/DN). The fatigue testing also determines strain energy release rates such as through analysis of a load-displacement curve.

The fatigue testing determines a Paris law behavior of the material. The Paris law behavior is the tendency of the material to experience a predictable, linear rate of fatigue crack growth when subjected to cyclic loading. Figure 4 illustrates the Paris law behavior of a material with a curve 91 for a set of Da/DN points measured during testing at multiple effective strain energy release rates Geff. As shown by the curve 91, the crack generally does not grow below a first threshold 130 and propagates at an exponentially increasing rate above a second threshold 131. Between the first threshold 130 and the second threshold 131, the crack generally propagates at a constant rate. The constant rate can be expressed by the following equation: $Da / DN = C {\left(Gmax\right)}^{m}$ where m is a constant and dependent on the material, and C varies with the R-ratio.

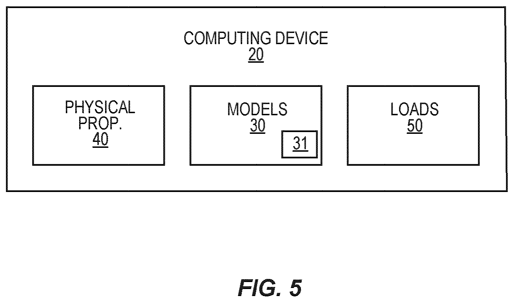

The physical properties 40 determined through the static testing and fatigue testing of the test coupons 50 are used during the computer simulations. As illustrated in Figure 5, a computing device 20 is configured to run the simulations using one or more computer models 30 of the structure. The computer models 30 are configured with a crack 31 having an initial length. The models 30 can include various formats, such as but not limited finite element models and closed form based models. In one example, the model 30 is a Davidson closed form model (See, DOT/FAA/AR-97/87, "A Predictive Methodology for Delamination Growth in Laminated Composites", Davidson, Barry). The Davidson method is a general mode prediction of delamination growth in laminated structures under static loading. Other examples of models 30 include but are not limited to first order shear deformation theory models and higher order shear deformation zig-zag theory models.

The simulations apply loads to the model 30. Each load applies an upper force and a lower force which is referred to as a peak-valley pair. An R-ratio of the load is defined by the peak-valley pair (i.e., the ratio of the minimum load and maximum load). Multiple loads are applied during the simulation with the loads having a wide spectrum of different amplitudes. The different amplitudes of the loads introduce complexities to the structure that can affect the crack in different manners than the application of constant amplitude loads.

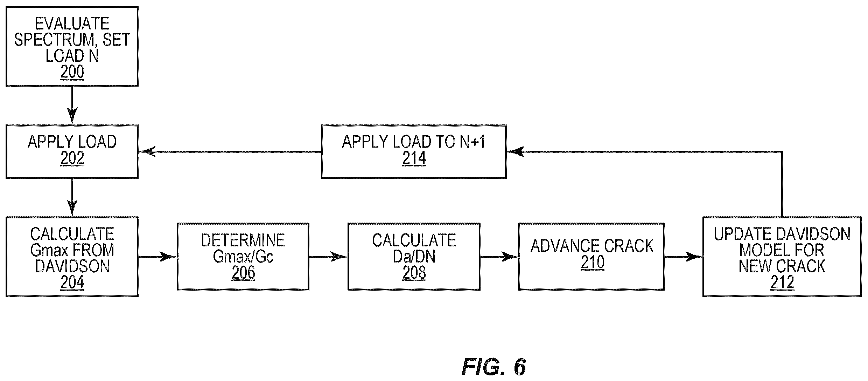

Figure 6 illustrates a method to evaluate a design of a structure. In this example, the simulation uses a Davidson model. The method includes determining the criteria for the simulation including a spectrum of loads. The spectrum of loads is broken into a set of N loads each with a peak-valley pair having an R-ratio (block 200).

The simulation begins with the first load with a first R-ratio being applied to the model 30 (block 202). The model 30 determines the Gmax corresponding to the upper load of the peak valley pair, Gmin corresponding to the lower load of the peak valley pair, and the crack length a (block 204). In some examples, Gmax is the result of the maximum applied force (and Gmin is the result of the minimum applied force). In other examples, Gmax is the result of the valley of the load, such as when the load has a strong R-ratio.

The parameters determined from the Davidson model are applied to the experimental R-curve 90 that was determined during the testing (see Figure 3). Using the R-curve 90, relationships are determined between Gmax/Gc and Gmin/Gc (block 206). These relationships are then used to determine an effective difference in the strain energy release rates (Eff Delta G).

The effective delta G is then applied to the Paris law behavior curve 91 determined during the testing (see Figure 4). This enables a determination of Da/DN for the load N (block 208). This application to the Paris law behavior curve 91 determines where the material is on the curve 91 and how quickly the crack is expected to advance. As illustrated in Figure 4, farther right along the curve 91 indicates an expected increase in the rate of crack advance.

The process advances the crack (block 210) and updates the model 30 to include the new crack length (block 212). The process advances to the next load cycle (N + 1)(block 214) which is then applied to the updated model 30 for the next simulation cycle.

The method enables designing a structure that will accommodate the expected crack propagation. This enables the design to be configured without the need for the additional margin of material that is used in present contexts. This can result in the structure being lighter and using less material. If the simulations indicate that the crack propagation is an issue and the threshold is not met, the design can be updated and subsequently tested.

The methods and systems determine whether a crack would advance in such a way that it results in the reduction of the load carrying capability of the structure. In some examples, the methods and system determine whether the structure experiences a loss in load carrying capability relative to a predetermined threshold. When the structure is determined to be a viable option for the design loads, the structure can be manufactured from the material. The manufactured structure can be used for its intended purpose. In one example in which the structure is designed for an aircraft, the structure is installed in the aircraft either at the time of original manufacture or at a later time (e.g., a replacement structure).

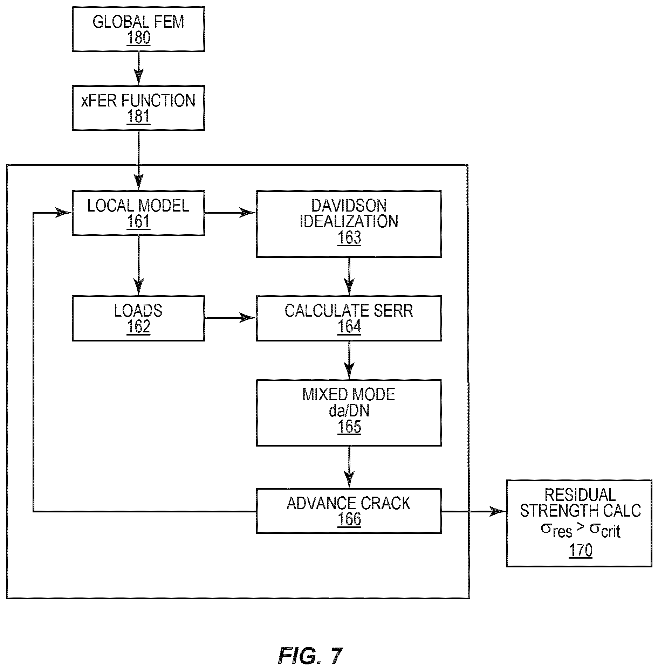

Figure 7 illustrates a method of testing a crack growth in a structure 100. A computer model 30 of the structure 100 and test loads are determined for use in the testing (blocks 161, 162). In this example, a Davidson model is used in the testing (block 163). A load is applied to the model 30 to calculate the strain energy release rate G (block 164). The mixed mode Paris law is determined as a ratio in the change in crack length to load cycle da/DN (block 165). The advance in the crack 103 is determined and applied to the model 30 (block 166). The process repeats for the next load in the test procedure. In some examples, this initial portion of the method of Figure 7 is the same as the method disclosed above for Figure 6.

A residual strength is calculated for the design (block 170). The results enable the determination of whether the structure will fail as a result of crack advance (i.e., σᵣₑₛ > σ_{crit}). The process can continue through multiple load cycles depending upon the testing protocol.

In some examples, the method is linked to a larger assembly of which the structure is a smaller component. Examples include but are not limited to the structure being a strut of a larger wing of an aircraft, and the structure being a wing of an overall aircraft. As illustrated in Figure 7, the method linked to a global finite element model (FEM) (block 180) and via transfer functions (block 181) is used to account for load redistribution as a result of long damage/crack growth.

In some examples, the simulations are run on high performance computing (HPC) systems, with large memory storage and multi-processors. In some examples, the use of a closed form model in the simulation enables rapid analysis using spreadsheet like computational methods.

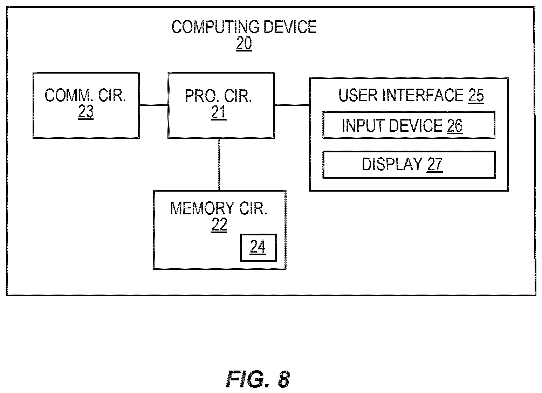

Figure 8 illustrates an example of a computing device 20 configured to perform the testing. The computing device 20 includes processing circuitry 21, memory circuitry 22, and communication circuitry 23. The processing circuitry 21 controls overall testing operation according to program instructions 24 stored in the memory circuitry 52. The processing circuitry 21 can include one or more circuits, microcontrollers, microprocessors, hardware, or a combination thereof. The processing circuitry 21 can include various amounts of computing power to provide for the needed functionality.

Memory circuitry 22 includes a non-transitory computer readable storage medium storing the program instructions 24, such as a computer program product, that configures the processing circuitry 21 to implement one or more of the techniques discussed herein. Memory circuitry 22 can include various memory devices such as, for example, read-only memory, and flash memory. Memory circuitry 22 can be a separate component as illustrated in Figure 8 or can be incorporated with the processing circuitry 21.

Communication circuitry 23 provides for communications to and from the computing device 20. The communication circuitry 23 comprises the hardware required for communicating with a remote node. The communication circuitry 23 may be configured for wireless and/or wired communications.

A user interface 25 provides for a user to access data about the methods and systems. The user interface 25 includes one or more input devices 26 such as but not limited to a keypad, touchpad, roller ball, and joystick. The user interface 25 also includes one or more displays 27 for displaying information regarding the testing and/or for an operator to enter commands to the processing circuitry 21.

The methods and systems can be used in a variety of different contexts. One context is for use in the design and analysis of damage tolerance in fracture critical structures. Another context is for smarter testing to assist in testing fracture critical structures by rapidly identifying limiting cases of the design envelope. Another use is to develop lightweight structures as this can be used to evaluate architectures and configurations in the analytical domain before testing in the physical domain. These concepts provide cost savings as there will be less of a need to rely on large, configured panel tests for determining damage tolerance.

The present invention may be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

## Claims

1. A method of determining propagation of a crack within a structure made of a bonded or layered material, the method comprising:
performing experimental testing on one or more test coupons (50) of the material and determining an R-curve (90) and a Paris law curve (91);
performing a computer simulation that applies a cycle of loads to a computer model (30) of the structure, for each of the loads:
determining strain energy release rates and a crack length of the applied load;
applying the strain energy release rates and crack lengths to the R-curve (90) and determining an effective strain energy release rate;
applying the effective strain energy release rate to the Paris law curve (91) and determining a change in the crack length for the cycle; and
advancing a crack that is simulated in the computer model (30).

2. The method of claim 1, wherein determining the strain energy release rates for each of the loads comprises determining a maximum strain energy release rate and a minimum strain energy release rate for each of the loads.

3. The method of claim 1 or 2, wherein performing experimental testing on one or more test coupons (50) comprises connecting the one or more test coupons (50) to a test frame (55) and performing fatigue testing and static testing on the one or more test coupons (50).

4. The method of any of claims 1-3, further comprising applying a spectrum of loads with different forces to the computer model (30) during the computer simulation.

5. The method of any of claims 1-4, further comprising including an initial crack (51) in the computer model (30) prior to applying the cycle of loads to the computer model (30).

6. The method of any of claims 1-5, further comprising based on a length of the crack after each of the loads determining whether the structure has detrimental crack growth with the structure having a load carrying capability below a predetermined threshold.

7. The method of any of claims 1-6, further comprising performing the computer simulation and analyzing an effect of cyclical loading on the structure,
optionally or alternatively further comprising analyzing a growth of the crack in the structure and determining how the crack grows during successive ones of the load cycles,
optionally or alternatively further comprising
determining a residual strength of the structure; and
determining whether the structure will fail as a result of crack advance.

8. The method of any of claims 1-7, further comprising:
linking the structure to a global finite element model; and
determining load redistribution of the structure to a larger structure to which it is connected based on a growth in the crack.

9. The method of any of claims 1-8, further comprising:
determining that the structure is viable for an intended purpose based on a change in the growth of the crack during the cyclic loads; and
building the structure from the material.

10. The method of any of claims 1-9, further comprising determining the structure is viable when the crack is below a predetermined threshold,
the method optionally further comprising building an actual structure from the material after determining that the structure is viable,
the method optionally further comprising installing the actual structure in an aircraft.

11. The method of any of claims 1-10, further comprising determining a critical strain energy release rate from the experimental testing.

12. A computing device configured to determine propagation of a crack within a structure made of a bonded or layered material, the computing device comprising:
processing circuitry (21); and
memory circuitry (22) comprising a computer model (30) of the structure and physical properties of the structure, the memory circuitry (22) further comprising program instructions (24) that, when executed by the processing circuitry (21), configures the computing device to:
perform a computer simulation that applies a cycle of loads to the computer model (30);
determine strain energy release rates and a crack length after each of the applied loads through the computer model (30);
apply the strain energy release rates and crack lengths to an R-curve (90) of the material and determine effective strain energy release rates for the applied loads;
apply the effective strain energy release rates to a Paris law curve (91) of the material and determine changes in the crack length for the load cycles; and
advance a crack that is simulated in the computer model (30) after the load cycles.

13. The computing device of claim 12, further comprising the computing device configured to determine that the structure is viable after the load cycles when the crack is less than a predetermined threshold.

14. The computing device of claim 12 or 13, further comprising the computing device configured to determine a residual strength of the structure and whether the structure will fail based on the residual strength.

15. The computing device of any of claims 12-14, wherein the computer model (30) is a Davidson model (30).
